# EUROPEAN PATENT APPLICATION

(11) **EP 4 556 950 A1**
(43) Date of publication of application: **21.05.2025**
(21) Application number: 24213138.1
(22) Date of filing: 15.11.2024
(51) Int. Cl.: G01S 7/521, G01S 15/58, G01S 15/87, G01S 15/931

(54) **SENSOR MOUNTING STRUCTURE**

(30) Priority: 17.11.2023 JP 2023195867
(71) Applicant: TOYOTA JIDOSHA KABUSHIKI KAISHA, Aichi-ken, 471-8571 (JP)
(72) Inventor: IKENO, Eisuke, TOYOTA-SHI, AICHI-KEN, 471-8571 (JP)
(74) Representative: Cabinet Beau de Loménie

(57) **Abstract**

A sensor mounting structure includes: an outer plate member provided with a through hole (7); an ultrasonic sensor (10) arranged more inward than the through hole; and a sealing member (30) arranged spaced apart from the ultrasonic sensor, the sealing member covering the through hole. The sensor mounting structure is configured such that an ultrasonic wave transmitted from the ultrasonic sensor passes through the through hole and propagates to an outside via the sealing member, and a reflected wave reflected from the outside passes through the through hole via the sealing member and is received by the ultrasonic sensor.

## Description

### TECHNICAL FIELD

The present disclosure relates to a sensor mounting structure.

### BACKGROUND ART

In the related art, providing an ultrasonic sensor as a clearance sonar on an outer plate member such as a bumper of a vehicle is known (for example, JP 2020-161888 A). In particular, the ultrasonic sensor described in JP 2020-161888 A is arranged in a mounting hole formed in the bumper such that a top surface of the ultrasonic sensor is exposed to the outside through the mounting hole.

### SUMMARY

When an ultrasonic sensor is arranged in a through hole formed in an outer plate member such as a bumper, a step or a biased gap may be formed between a surface of the outer plate member around the ultrasonic sensor and an outer surface of the ultrasonic sensor, or the surface of the outer plate member and the outer surface of the ultrasonic sensor may be inclined with respect to each other. When such a step, a biased gap, or an inclination is formed, the appearance of the outer plate member is deteriorated.

In view of the above-described problem, an object of the present disclosure is to provide a sensor mounting structure capable of suppressing deterioration in the appearance of an outer plate member provided with an ultrasonic sensor.

The gist of the present disclosure is as follows.
(1) A sensor mounting structure comprising:
   an outer plate member provided with a through hole;
   an ultrasonic sensor arranged more inward than the through hole; and
   a sealing member arranged spaced apart from the ultrasonic sensor, the sealing member covering the through hole, wherein
   the sensor mounting structure is configured such that an ultrasonic wave transmitted from the ultrasonic sensor passes through the through hole and propagates to an outside via the sealing member, and a reflected wave reflected from the outside passes through the through hole via the sealing member and is received by the ultrasonic sensor.
(2) The sensor mounting structure according to above (1), wherein the sealing member is configured such that an amplitude of the ultrasonic wave transmitted from the ultrasonic sensor to the outside via the sealing member is larger than an amplitude of the ultrasonic wave transmitted from the ultrasonic sensor to the outside via the outer plate member in a case where the outer plate member is provided instead of the sealing member.
(3) The sensor mounting structure according to above (1) or (2), wherein the sealing member is configured to resonate with the ultrasonic wave transmitted by the ultrasonic sensor.
(4) The sensor mounting structure according to any one of above (1)-(3), wherein the sealing member is configured to have a natural frequency that deviates from a natural frequency of a member configured to transmit the ultrasonic wave in the ultrasonic sensor by 5% or less.
(5) The sensor mounting structure according to any one of above (1)-(4), wherein a thickness of the sealing member is smaller than a thickness of the outer plate member.
(6) The sensor mounting structure according to any one of above (1)-(5), wherein
   the outer plate member has a plurality of the through holes,
   one of the ultrasonic sensor and one of the sealing member are arranged for each of the plurality of through holes, and
   the sealing member is configured to have at least partially different thicknesses.
(7) The sensor mounting structure according to any one of above (1)-(6), wherein the sealing member is formed of the same material as a member configured to transmit the ultrasonic wave in the ultrasonic sensor.
(8) The sensor mounting structure according to any one of above (1)-(7), wherein
   the outer plate member has a coating film on an outer surface side thereof, and
   the sealing member has, on an outer surface side thereof, a coating film formed of the same material as the coating film of the outer plate member.
(9) The sensor mounting structure according to any one of above (1)-(8), wherein the sealing member and the ultrasonic sensor are spaced apart by a non-conductive spacer arranged between the sealing member and the ultrasonic sensor.
(10) The sensor mounting structure according to any one of above (1)-(9), further comprising a processing unit electrically connected to the ultrasonic sensor, wherein
   the processing unit calculates a speed of a surrounding object based on a value obtained by multiplying a frequency of the reflected wave detected by the ultrasonic sensor by a predetermined coefficient, and
   the coefficient changes based on at least one of a distance and an angle between the ultrasonic sensor and the sealing member.

### BRIEF DESCRIPTION OF DRAWINGS

Figs. 1A and 1B are views of a vehicle provided with a sensor mounting structure according to one embodiment.
Fig. 2 is a cross-sectional view taken along line A-A of Fig. 1B, illustrating a configuration around a rear bumper.
Fig. 3 is a schematic cross-sectional view of an ultrasonic microphone.
Figs. 4A and 4B are cross-sectionals view taken along line A-A and B-B of Fig. 1B respectively, illustrating the configuration around the rear bumper.
Fig. 5 is a block diagram schematically illustrating a configuration of electronic components of the vehicle.
Fig. 6 is a cross-sectional view similar to Fig. 2, illustrating a configuration around a rear bumper according to one modified example.
Fig. 7 is a schematic cross-sectional view of an ultrasonic microphone according to one modified example.

### DESCRIPTION OF EMBODIMENTS

Hereinafter, embodiments will be described in detail with reference to the drawings. In the following description, similar components are denoted by the same reference numerals.

### Configuration of Vehicle

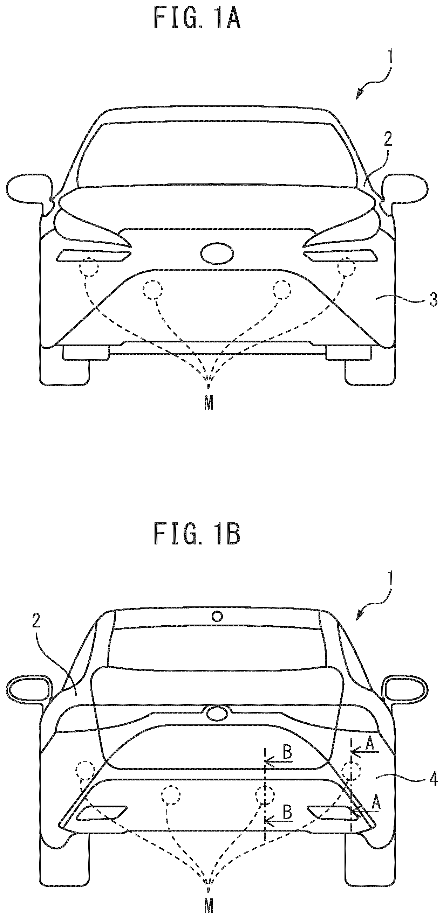

First, a vehicle 1 provided with a sensor mounting structure according to one embodiment will be briefly described with reference to Figs. 1A and 1B. Figs. 1A and 1B are front and rear views of a vehicle provided with a sensor mounting structure according to one embodiment. In particular, Fig. 1A is the front view of the vehicle 1, and Fig. 1B is the rear view of the vehicle 1.

In the present embodiment, the vehicle 1 is a four-wheeled automobile and has a box-like outer shape. As illustrated in Figs. 1A and 1B, the vehicle 1 includes a vehicle body panel 2, a front bumper 3, and a rear bumper 4 as components constituting an outer plate of the vehicle 1. Therefore, the vehicle body panel 2, the front bumper 3, and the rear bumper 4 are examples of outer plate members constituting the outer plate of the vehicle 1. As illustrated in Fig. 1A, the front bumper 3 is provided at a front end portion of the vehicle 1, and as illustrated in Fig. 1B, the rear bumper 4 is provided at a rear end portion of the vehicle 1. The vehicle 1 may be a vehicle other than a four-wheeled vehicle, such as a three-wheeled vehicle.

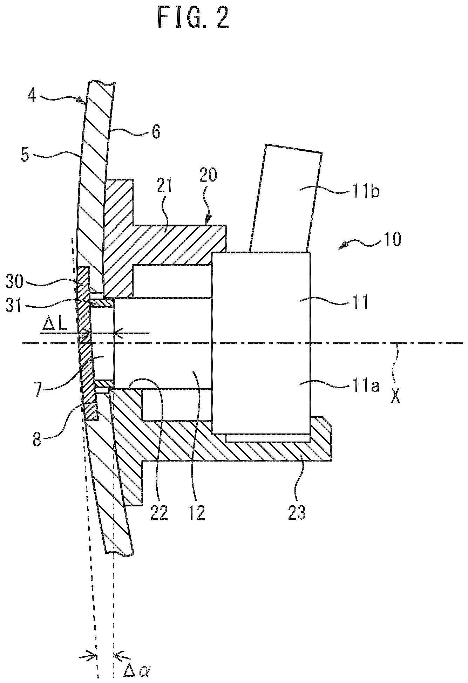

In the present embodiment, ultrasonic sensors 10 (see Fig. 2) are attached to the inside of each of the front bumper 3 and the rear bumper 4. The ultrasonic sensors 10 attached to the front bumper 3 and the rear bumper 4 detect objects present in front of and behind the vehicle 1. The ultrasonic sensor 10 may be attached to the outer plate member other than the bumpers 3 and 4.

The ultrasonic sensors 10 are provided inside the bumpers 3 and 4 at a position indicated by a broken line M in Figs. 1A and 1B. In the present embodiment, the front bumper 3 is provided with a plurality (four in the example of Fig. 1A) of ultrasonic sensors 10, and these ultrasonic sensors 10 are arranged to be spaced apart from each other in a vehicle width direction. Similarly, in the present embodiment, the rear bumper 4 is provided with a plurality (four in the example of Fig. 1B) of ultrasonic sensors 10, and these ultrasonic sensors 10 are arranged to be spaced apart from each other in the vehicle width direction.

### Configuration of Sensor Mounting Structure

Next, the configuration of the sensor mounting structure around one ultrasonic sensor 10 will be described with reference to Fig. 2. Hereinafter, the configuration of the sensor mounting structure around the ultrasonic sensor 10 in the rear bumper 4 will be described as an example, while the front bumper 3 also has the same configuration. Fig. 2 is a cross-sectional view taken along line A-A of Fig. 1B, illustrating the configuration around the rear bumper 4.

As illustrated in Fig. 2, the sensor mounting structure includes the ultrasonic sensor 10, the rear bumper 4 on which the ultrasonic sensor 10 is disposed, a fixture 20 for attaching the ultrasonic sensor 10 on the rear bumper 4, a sealing member 30 for sealing a through hole 7 of the rear bumper 4, and a spacer 31 for spacing apart the ultrasonic sensor 10 and the sealing member 30 from each other.

### Configuration of Bumper

A configuration of the rear bumper 4 around the ultrasonic sensor 10 will be described with reference to Fig. 2. In the present embodiment, the rear bumper 4 is formed of a resin. However, the rear bumper 4 may be formed of a material other than a resin, such as a metal. As illustrated in Fig. 2, the rear bumper 4 has an outer surface 5 facing the outside of the vehicle 1 and an inner surface 6 (a surface facing the inside of the vehicle 1) opposite to the outer surface 5. The rear bumper 4 has a coating film of an arbitrary coating material on the outer surface 5.

In addition, the rear bumper 4 has the through hole 7 provided between the outer surface 5 and the inner surface 6 so as to penetrate the rear bumper 4, and a recessed portion 8 formed around the through hole 7. Since one ultrasonic sensor 10 is provided in each through hole 7, a plurality of (four in the example of Fig. 1B) the through holes 7 are provided in the rear bumper 4. Since the recessed portion 8 is formed around each through hole 7, a plurality of (four in the example of Fig. 1B) the recessed portions 8 are provided in the rear bumper 4.

In the present embodiment, the through hole 7 is formed in a circular shape. However, the through hole 7 may have any shape other than a circular shape, such as a polygonal shape. The recessed portion 8 is a portion recessed from the outer surface 5 toward the inner surface 6 of the rear bumper 4. The recessed portion 8 is formed in an annular shape larger than the through hole 7 and communicates with the through hole 7. Therefore, as illustrated in Fig. 2, the rear bumper 4 is formed in a two-step shape around the through hole 7.

### Configuration of Ultrasonic Sensor

The ultrasonic sensor 10 is configured to be able to transmit and receive the ultrasonic wave. Specifically, in the present embodiment, the ultrasonic sensor 10 transmits the ultrasonic wave to the outside along the directional axis X. In addition, in the present embodiment, the ultrasonic sensor 10 receives a reflected wave obtained when the ultrasonic wave transmitted from the ultrasonic sensor 10 is reflected by an object existing in the surroundings, and generates and outputs a detection signal corresponding to the reception result.

As illustrated in Fig. 2, the ultrasonic sensor 10 includes a sensor case 11 and an ultrasonic microphone 12.

The sensor case 11 is a component that holds a substrate, an electronic component, and the like in addition to the ultrasonic microphone 12. The sensor case 11 includes a main body portion 11a and a connector 11b. The main body portion 11a holds the ultrasonic microphone 12 and accommodates a substrate having a circuit for performing amplification, reverberation adjustment, sensitivity adjustment, and the like therein. The connector 11b is provided on a side portion of the main body portion 11a, and is configured so that a wire-side connector for connection to an ECU 54 or the like, which will be described later, can be attached and detached.

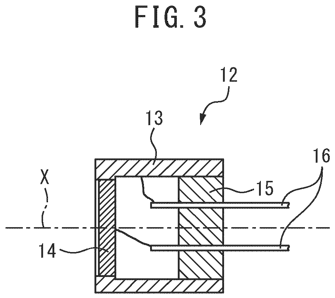

The ultrasonic microphone 12 transmits the ultrasonic wave and receives a reflected wave of the ultrasonic wave. Fig. 3 is a schematic cross-sectional view of the ultrasonic microphone 12. As illustrated in Fig. 3, the ultrasonic microphone 12 includes a housing 13, a piezoelectric element 14, a sound absorbing material 15, and terminals 16.

The housing 13 is a tubular member and is formed of, for example, a conductive material such as a metal. The housing 13 is fixed to the sensor case 11 so as to protrude from the sensor case 11. The axis of the housing 13 is located on the directional axis X.

The piezoelectric element 14 is an element in which an outer shape is distorted when a voltage is applied (inverse piezoelectric effect), and which generates a voltage when an external force is applied (piezoelectric effect). The piezoelectric element 14 generates an ultrasonic wave when a high-frequency alternating voltage is applied thereto, and outputs a high-frequency voltage corresponding to the ultrasonic wave when the ultrasonic wave is applied thereto. In particular, in the present embodiment, an alternating voltage is applied to the piezoelectric element 14 such that an ultrasonic wave having the same frequency as the natural frequency of the piezoelectric element 14 is transmitted. The piezoelectric element 14 is formed of a piezoelectric ceramic having such properties.

In the present embodiment, the piezoelectric element 14 is fixed to the housing 13 on the distal end side of the housing 13. In particular, the piezoelectric element 14 is arranged such that the piezoelectric element 14 is exposed to the outside of the housing 13 and thus to the outside of the ultrasonic sensor 10.

The sound absorbing material 15 is arranged more inwards than the piezoelectric element 14 in the housing 13. The sound absorbing material 15 is formed of a material capable of absorbing ultrasonic waves. The ultrasonic wave transmitted from the piezoelectric element 14 toward the inside of the housing 13 is absorbed by the sound absorbing material 15. As a result, in the ultrasonic microphone 12, the ultrasonic wave transmitted from the piezoelectric element 14 is radiated in one direction along the directional axis X.

The terminal 16 is formed of a conductive material such as a metal, and extends from the inside of the housing 13 to the outside of the housing 13. The ultrasonic microphone 12 is provided with two terminals 16, one of which is electrically connected to the housing 13 by a lead wire and the other of which is electrically connected to the piezoelectric element 14 by a lead wire.

In the ultrasonic microphone 12 configured as described above, when a high-frequency alternating voltage is applied between the terminals 16, the piezoelectric element 14 vibrates to generate an ultrasonic wave in a direction along the directional axis X. When the ultrasonic wave is applied to the piezoelectric element 14 from the outside, a high-frequency voltage corresponding to the ultrasonic wave is output between the terminals 16.

In the ultrasonic sensor 10 according to the present embodiment, one piezoelectric element 14 is responsible for both transmission and reception of the ultrasonic wave. However, the ultrasonic sensor 10 may be configured to include two piezoelectric elements, i.e., one piezoelectric element that transmits an ultrasonic wave and the other piezoelectric element that receives an ultrasonic wave and outputs a detection signal.

### Configuration of Fixture

The fixture 20 is a member for attaching the ultrasonic sensor 10 to the rear bumper 4. In the present embodiment, as illustrated in Fig. 2, each fixture 20 arranges one ultrasonic sensor 10 for each through hole 7. The fixture 20 is formed of an arbitrary material such as a resin or a metal. As illustrated in Fig. 2, the fixture 20 is fixed to the inner surface 6 of the rear bumper 4 in the vicinity of the through hole 7. The fixture 20 is fixed to the rear bumper 4 by a fastener such as a screw, an adhesive, or the like.

As illustrated in Fig. 2, the fixture 20 includes a main body portion 21, an opening 22, and a claw 23. The main body portion 21 is fixed to the inner surface 6 of the rear bumper 4 and holds the ultrasonic sensor 10. The opening 22 is formed at the center of the main body portion 21 facing the rear bumper 4. The opening 22 is formed so that the distal end of the ultrasonic microphone 12 of the ultrasonic sensor 10 is located within the opening 22 when the main body portion 21 holds the ultrasonic sensor 10. The fixture 20 is attached to the rear bumper 4 such that the opening 22 faces the through hole 7 of the rear bumper 4. In addition, a plurality of the claws 23 are provided on the fixture 20 and are used to hold the ultrasonic sensor 10 on the main body portion 21.

In the present embodiment, the main body portion 21 holds the ultrasonic sensor 10 with respect to the rear bumper 4 such that the directional axis X of the ultrasonic sensor 10 passes through the center of the through hole 7 of the rear bumper 4. The main body portion 21 holds the ultrasonic sensor 10 such that the distal end of the ultrasonic microphone 12 of the ultrasonic sensor 10 (the portion where the piezoelectric element 14 is provided) faces the vicinity of (immediately inside) the through hole 7. Therefore, the ultrasonic sensor 10 is arranged more inward than the through hole 7 to be able to transmit the ultrasonic wave through the through hole 7.

### Configuration of Sealing Member and Spacer

As illustrated in Fig. 2, the sealing member 30 is arranged to cover the through hole 7 of the rear bumper 4, i.e., to close the through hole 7. Therefore, the sealing member 30 is arranged outside the distal end of the ultrasonic microphone 12 of the ultrasonic sensor 10 facing the vicinity of the through hole 7. Therefore, the ultrasonic wave transmitted from the ultrasonic sensor 10 is propagated to the outside through the through hole 7 and the sealing member 30. The reflected wave reflected on the outside is received by the ultrasonic sensor 10 through the through hole 7 via the sealing member 30.

The sealing member 30 is arranged in each through hole 7 of the rear bumper 4. The sealing member 30 is formed to be larger than the through hole 7, and thus covers the entire through hole 7. In particular, in the present embodiment, the sealing member 30 has the same outer shape as the recessed portion 8, and thus is formed to be fitted into the recessed portion 8 without a gap.

The sealing member 30 is fixed on the recessed portion 8. In particular, in the present embodiment, the sealing member 30 is bonded to the bottom surface of the recessed portion 8. In particular, in the example illustrated in Fig. 2, the sealing member 30 is formed to have a thickness substantially equal to the depth of the recessed portion 8. Therefore, the outer surface of the sealing member 30 is flush or substantially flush with the outer surface 5 of the rear bumper 4. In addition, the sealing member 30 is arranged to be spaced apart from the ultrasonic sensor 10 without being in contact with the ultrasonic sensor 10.

Further, in the present embodiment, the sealing member 30 is formed of the same material as the material for transmitting the ultrasonic wave in the ultrasonic sensor 10, i.e., the same material as the piezoelectric element 14. The sealing member 30 is configured to have substantially the same natural frequency as the natural frequency of the piezoelectric element 14 of the ultrasonic sensor 10 (i.e., a member that transmits ultrasonic waves) when the sealing member 30 is attached to the rear bumper 4. More specifically, the sealing member 30 is configured to have a natural frequency that deviates from the natural frequency of the piezoelectric element 14 of the ultrasonic sensor 10 by 5% or less when the sealing member 30 is attached to the rear bumper 4.

Alternatively, the sealing member 30 is configured to resonate with the ultrasonic wave transmitted from the ultrasonic sensor 10. The fact that the sealing member 30 resonates with the ultrasonic wave transmitted from the ultrasonic sensor 10 means that the frequency of the ultrasonic wave transmitted from the ultrasonic sensor 10 (i.e., the natural frequency of the piezoelectric element 14) falls within a frequency range (hereinafter referred to as a "predetermined frequency band around the natural frequency of the sealing member 30") in which an output is larger than 1/√2 times the peak output in a frequency characteristic curve having the natural frequency of the sealing member 30 as a peak. More specifically, the sealing member 30 is configured such that, for example, the frequency of the ultrasonic wave transmitted from the ultrasonic sensor 10 falls within a predetermined frequency band around the natural frequency of the sealing member 30.

The natural frequency of the sealing member 30 varies not only according to the material and thickness of the sealing member 30, but also according to the manner in which the sealing member 30 is attached to the rear bumper 4, the shape of the rear bumper 4 around the sealing member 30, and the like. Therefore, even when the sealing members 30 having the same size and thickness are attached to the rear bumper 4 to cover the through holes 7 having the same size, the natural frequencies of the sealing members 30 of the rear bumper 4 may be different from each other. Therefore, when all the sealing members 30 attached to the rear bumper 4 have the same size and thickness, the natural frequency of some of the sealing members 30 is different from the natural frequency of the piezoelectric element 14 of the ultrasonic sensor 10.

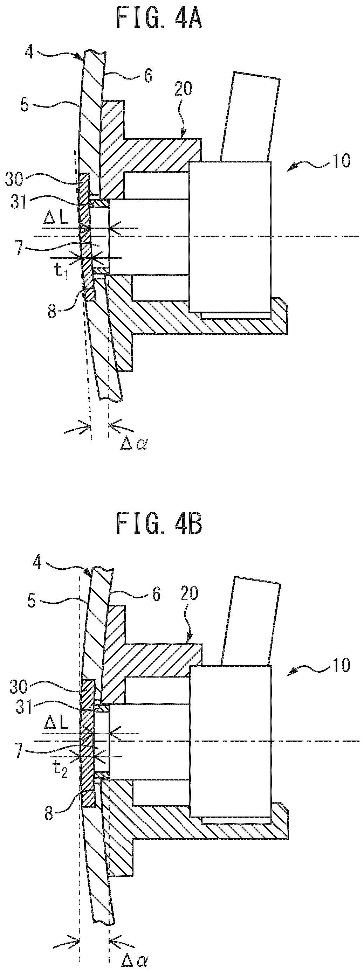

Therefore, in the present embodiment, the sealing member 30 is formed such that the thickness thereof is different for each sealing member 30 or for each of some sealing members 30. Figs. 4A and 4B are cross-sectional view illustrating a configuration around the rear bumper 4 taken along line A-A and line B-B in Fig. 1B. In particular, Fig. 4A is a cross-sectional view taken along line A-A of Fig. 1B, and Fig. 4B is a cross-sectional view taken along line B-B of Fig. 1B.

As can be seen from Figs. 4A and 4B, the thickness t₁ of the sealing member 30 illustrated in Fig. 4A is smaller than the thickness t₂ of the sealing member 30 illustrated in Fig. 4B. Therefore, in the present embodiment, the sealing member 30 is configured to have at least partially different thicknesses. However, both the sealing member 30 illustrated in Fig. 4A and the sealing member 30 illustrated in Fig. 4B are configured to have substantially the same natural frequency as the piezoelectric element 14 of the ultrasonic sensor 10, or to resonate with the ultrasonic wave transmitted by the ultrasonic sensor 10. More specifically, in the present embodiment, even if the sealing members 30 are attached to the rear bumper 4 in different manners and the rear bumper 4 around the sealing members 30 has different shapes, each sealing member 30 is configured to have substantially the same natural frequency as the piezoelectric element 14 of the ultrasonic sensor 10 or to resonate with the ultrasonic wave transmitted by the ultrasonic sensor 10.

Further, in the present embodiment, the sealing member 30 has a coating film formed of the same material as the coating film of the rear bumper 4 on the outer surface side thereof. In particular, in the present embodiment, after the sealing member 30 is attached to the recessed portion 8 of the rear bumper 4 before coating, the rear bumper 4 and the sealing member 30 are collectively coated. As described above, in the present embodiment, since the outer surface of the sealing member 30 is flush or substantially flush with the outer surface 5 of the rear bumper 4, it is difficult to recognize that the sealing member 30 is provided in appearance. In this manner, since the sealing member 30 has the coating film formed of the same material as the coating film of the rear bumper 4 and the outer surface of the sealing member 30 is flush or substantially flush with the outer surface 5 of the rear bumper 4, the deterioration of the appearance of the rear bumper 4 due to the provision of the ultrasonic sensor 10 is suppressed.

The spacer 31 is arranged between the sealing member 30 and the ultrasonic sensor 10, in particular, between the inner surface of the sealing member 30 and the outer surface of the ultrasonic microphone 12. As a result, the sealing member 30 and the ultrasonic sensor 10 are spaced apart from each other by the spacer 31. The spacer 31 is formed in an annular shape, and faces the outer surface of the housing 13 of the ultrasonic microphone 12. The spacer 31 is in contact with at least one of the inner surface of the sealing member 30 and the outer surface of the ultrasonic microphone 12. As a result, the piezoelectric element 14 of the ultrasonic microphone 12 is prevented from coming into contact with the sealing member 30 formed of the same material as the piezoelectric element 14.

The spacer 31 is formed of a non-conductive material, for example, a resin. Therefore, even if the spacer 31 comes into contact with both the sealing member 30 and the ultrasonic sensor 10, a current is prevented from flowing between the sealing member 30 and the piezoelectric element 14 of the ultrasonic sensor 10. Therefore, the piezoelectric element 14 is prevented from being short-circuited, and a part of the current to be supplied to the piezoelectric element 14 is prevented from flowing to the sealing member 30.

### Electronic Component

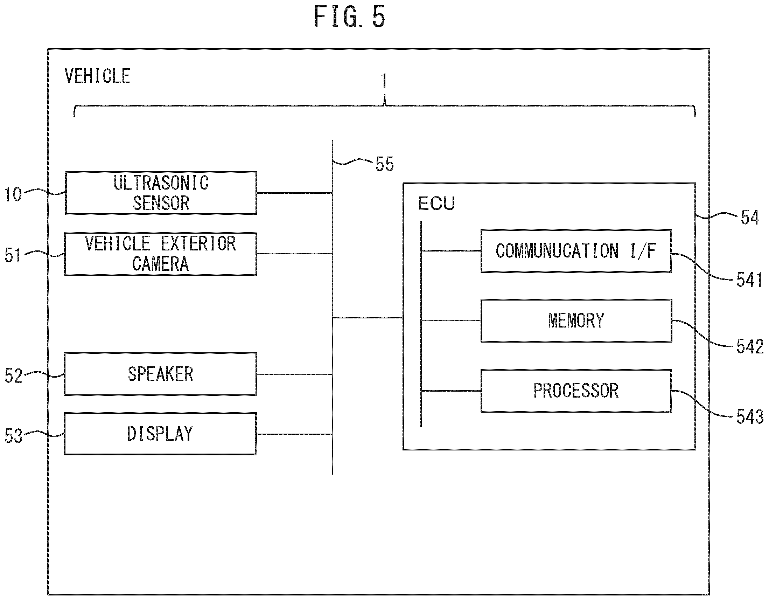

Next, an electronic component included in the vehicle 1 will be described with reference to Fig. 5. Fig. 5 is a block diagram schematically illustrating a configuration of electronic components of the vehicle 1. As illustrated in Fig. 5, in the present embodiment, the vehicle 1 includes a vehicle exterior camera 51, a speaker 52, a display 53, and an electronic control unit (hereinafter referred to as "ECU") 54, in addition to the ultrasonic sensor 10. However, the vehicle 1 may not necessarily include all of these. For example, the vehicle 1 may not include the speaker 52.

The ultrasonic sensor 10, the vehicle exterior camera 51, the speaker 52, the display 53, and the ECU 54 are electrically communicably connected to each other via an in-vehicle network 55. The in-vehicle network 55 is a network conforming to a standard such as a controller area network (CAN).

The vehicle exterior camera 51 is a device that images the surroundings of the vehicle 1. The vehicle exterior camera 51 outputs a captured image to the ECU 54 via the in-vehicle network 55 at predetermined intervals. The speaker 52 is a device that outputs sound, and the display 53 is a device that displays an image. The speaker 52 and the display 53 outputs sound and displays an image based on a signal received from the ECU 54 via the in-vehicle network 55.

The ECU 54 functions as a processing unit that processes the received signal. In the present embodiment, the ECU 54 calculates the distance to an object around the vehicle 1 and the relative speed of the object based on the output of the ultrasonic sensor 10. In addition, when the ECU 54 determines that the object around the vehicle 1 is close or will be close based on the output of the ultrasonic sensor 10, the ECU 54 outputs a sound signal to the speaker 52 to emit a warning sound, and outputs an image signal to the display 53 to display an image representing a warning. At this time, the ECU 54 may output an image signal to the display 53 to display a warning superimposed on the image captured by the vehicle exterior camera 51.

As illustrated in Fig. 5, the ECU 54 includes a communication interface 541, a memory 542, and a processor 543. The communication interface 541 is a circuit for connecting the ECU 54 to other electronic components in the vehicle 1. The memory 542 is a storage medium that stores data, and stores, for example, a computer program executed by the processor 543 and various data used by the computer program being executed. The processor 543 executes various processes in accordance with a computer program stored in the memory 542 based on the signals received from the ultrasonic sensor 10 and the vehicle exterior camera 51.

In the present embodiment, the processor 543 calculates the distance to an object around the vehicle 1, particularly, an object located in the direction of the directional axis X of each ultrasonic sensor 10, and the speed of the object, based on the output of the ultrasonic sensor 10. In particular, the processor 543 calculates the distance to the object based on the delay of the ultrasonic wave (the reflected wave reflected by the surrounding object) received by the ultrasonic sensor 10 with respect to the ultrasonic wave transmitted by the ultrasonic sensor 10. Specifically, the processor 543 calculates that the distance to the object is farther as the delay of the reflected wave received by the ultrasonic sensor 10 with respect to the ultrasonic wave transmitted by the ultrasonic sensor 10 is larger.

Further, the processor 543 calculates the speed of the surrounding object based on the frequency of the ultrasonic wave (reflected wave) received by the ultrasonic sensor 10. Specifically, when the frequency of the reflected wave received by the ultrasonic sensor 10 is the same as the frequency of the ultrasonic wave transmitted by the ultrasonic sensor 10, the processor 543 calculates the relative speed of the object with respect to the vehicle 1 (i.e., with respect to the ultrasonic sensor 10) as substantially zero. When the frequency of the reflected wave received by the ultrasonic sensor 10 is higher than the frequency of the ultrasonic wave transmitted by the ultrasonic sensor 10, the processor 543 calculates the relative speed of the object assuming that the object is approaching the vehicle 1. In particular, the processor 543 calculates the relative speed of the object assuming that the higher the frequency of the reflected wave received by the ultrasonic sensor 10, the higher the relative speed at which the object approaches the vehicle 1. On the other hand, when the frequency of the reflected wave received by the ultrasonic sensor 10 is lower than the frequency of the ultrasonic wave transmitted by the ultrasonic sensor 10, the processor 543 calculates the relative speed of the object assuming that the object is moving away from the vehicle 1. In particular, the processor 543 calculates the relative speed of the object assuming that the lower the frequency of the reflected wave received by the ultrasonic sensor 10, the higher the relative speed at which the object moves away from the vehicle 1.

In the present embodiment, a plurality of the ultrasonic sensors 10 are arranged on the rear bumper 4. The shape of the rear bumper 4 around the arrangement position is different for each arrangement position or for each of a plurality of mounting positions, and the optimum angle of the directional axis X with respect to the surface of the rear bumper 4 around the mounting position is also different. As a result, a distance ΔL between the inner surface of the sealing member 30 and the distal end of the ultrasonic microphone 12 of the corresponding ultrasonic sensor 10 is different for each sealing member 30 or for some sealing members 30 (for example, the distance ΔL is different between Fig. 4A and Fig. 4B). In addition, an angle Δα between the inner surface of the sealing member 30 and the distal end surface of the ultrasonic microphone 12 of the corresponding ultrasonic sensor 10 is different for each sealing member 30 or for some sealing members 30 (for example, the angle Δα is different between Fig. 4A and Fig. 4B).

The frequency of the ultrasonic wave transmitted from the ultrasonic sensor 10 changes when the ultrasonic wave passes through the sealing member 30. At this time, the degree of change in frequency changes in accordance with the distance ΔL between the inner surface of the sealing member 30 and the distal end surface of the ultrasonic microphone 12 and the angle Δα between the inner surface of the sealing member 30 and the distal end surface of the ultrasonic microphone 12.

Therefore, in the present embodiment, the processor 543 calculates the relative speed of the surrounding object based on a corrected frequency obtained by multiplying the frequency of the reflected wave detected by the ultrasonic sensor 10 by a predetermined coefficient. The coefficient is set to a value that changes, depending on the distance between the sealing member 30 and the ultrasonic sensor 10, in particular, the distance ΔL between the inner surface of the sealing member 30 and the distal end of the ultrasonic microphone 12 of the corresponding ultrasonic sensor 10. In addition, the coefficient is set to a value that changes, depending on the angle between the sealing member 30 and the ultrasonic sensor 10, in particular, the angle Δα between the inner surface of the sealing member 30 and the distal end surface of the ultrasonic microphone 12 of the corresponding ultrasonic sensor 10.

As a result, according to the present embodiment, even if the distance or the angle between the sealing member 30 and the ultrasonic sensor 10 is different for each ultrasonic sensor 10, the relative speed of the object around the vehicle 1 can be calculated relatively accurately. In the present embodiment, the coefficient used to calculate the corrected frequency is a value that changes based on both the distance ΔL and the angle Δα. However, the coefficient may be a value that changes based on only one of the distance ΔL and the angle Δα.

### Effects and Modified Example

In the above-described embodiment, the sealing member 30 is arranged outside the ultrasonic sensor 10 in the rear bumper 4. As a result, the ultrasonic sensor 10 is not exposed to the outside, and the appearance of the rear bumper 4 provided with the ultrasonic sensor 10 is prevented from being deteriorated.

In addition, in the present embodiment, the sealing member 30 is configured to have substantially the same natural frequency as the natural frequency of the piezoelectric element 14 of the ultrasonic sensor 10, or to resonate with the ultrasonic wave transmitted by the ultrasonic sensor 10. In particular, the sealing member 30 is formed of the same material as the piezoelectric element 14. As a result, the ultrasonic wave transmitted from the ultrasonic sensor 10 is prevented from being damped by the sealing member 30, and in some cases, the ultrasonic wave transmitted from the ultrasonic sensor 10 is amplified by the sealing member 30.

In the above embodiment, the sealing member 30 is configured to have substantially the same natural frequency as the natural frequency of the piezoelectric element 14 of the ultrasonic sensor 10. Alternatively, the sealing member 30 is configured to resonate with the ultrasonic wave transmitted from the ultrasonic sensor 10. However, the sealing member 30 may have a configuration different from the above-described configuration as long as the amplitude of the ultrasonic wave transmitted from the ultrasonic sensor 10 to the outside via the sealing member 30 is larger than the amplitude of the ultrasonic wave transmitted from the ultrasonic sensor 10 to the outside via the rear bumper 4 when the rear bumper 4 is provided instead of the sealing member 30. Therefore, the sealing member 30 may be formed of a material different from that of the piezoelectric element 14 of the ultrasonic sensor 10, for example, a metal. At this time, the sealing member 30 may be formed to have a thickness smaller than the thickness of the rear bumper 4 so that the damping by the sealing member 30 is suppressed more than the damping by the rear bumper 4. Further, the sealing member 30 may be formed of the same material as the rear bumper 4 to be thinner than the rear bumper 4. Even in this case, the ultrasonic wave transmitted from the ultrasonic sensor 10 is prevented from being damped by the sealing member 30.

Alternatively, the sealing member 30 may not be configured such that the amplitude of the ultrasonic wave transmitted from the ultrasonic sensor 10 to the outside via the sealing member 30 is larger than the amplitude of the ultrasonic wave transmitted from the ultrasonic sensor 10 to the outside via the rear bumper 4 if the rear bumper 4 is provided instead of the sealing member 30. Even in this case, as described above, since the sealing member 30 is arranged on the outer side of the ultrasonic sensor 10 in the rear bumper 4, the deterioration of the appearance of the rear bumper 4 is suppressed.

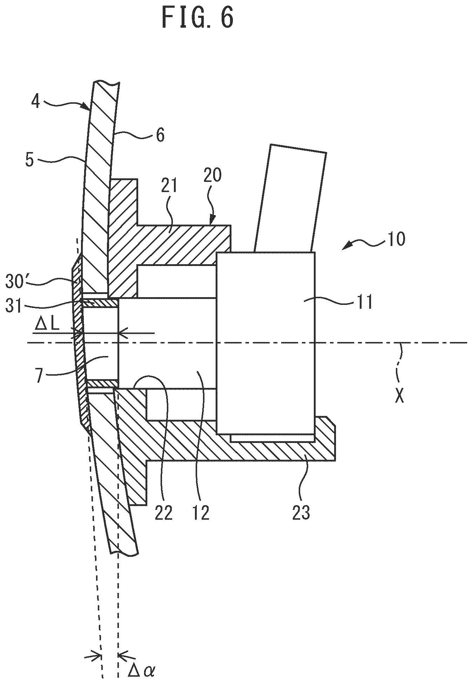

In the above embodiment, the recessed portion 8 is provided around the through hole 7 of the rear bumper 4, and the sealing member 30 is arranged in the recessed portion 8. However, the recessed portion 8 may not be provided in the rear bumper 4. Fig. 6 is a cross-sectional view similar to Fig. 2, illustrating a configuration around the rear bumper 4 according to one modified example. In the modified example illustrated in Fig. 6, the rear bumper 4 is not provided with the recessed portion 8. Therefore, a sealing member 30' is arranged on the outer surface 5 of the rear bumper 4 to cover the through hole 7. In particular, in the modified example illustrated in Fig. 6, the edge portion of the sealing member 30' is formed such that the thickness gradually decreases toward the edge. Therefore, the joint between the sealing member 30' and the rear bumper 4 is relatively smoothly formed, and thus the deterioration of the appearance of the rear bumper 4 is suppressed.

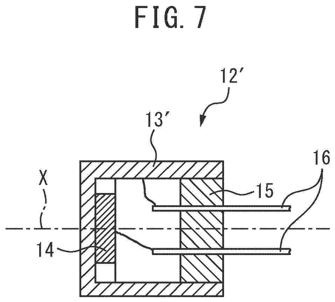

The ultrasonic sensor 10 may have a configuration different from the above-described configuration. Fig. 7 is a schematic cross-sectional view of an ultrasonic microphone 12' according to one modified example. In the modified example illustrated in Fig. 7, the ultrasonic microphone 12' has a housing 13' which is closed at the distal end. In addition, in the modified example illustrated in Fig. 7, the ultrasonic microphone 12' is fixed to the inside of the housing 13' located on the distal end side. Even in this case, an ultrasonic wave having the same frequency as the natural frequency of the piezoelectric element 14 is transmitted from the ultrasonic sensor 10. Therefore, even in this case, the sealing member 30 is configured to have substantially the same natural frequency as the natural frequency of the piezoelectric element 14 of the ultrasonic microphone 12'.

Further, in the above embodiment, the distance to the object around the vehicle 1 and the relative speed of the object are calculated based on the output of the ultrasonic sensor 10 in the ECU 54. However, a processing unit such as a processor or an arithmetic circuit may be provided in the ultrasonic sensor 10, and the processing unit of the ultrasonic sensor 10 may calculate the distance to the object around the vehicle 1 and the relative speed of the object based on the output of the ultrasonic sensor 10.

Although the preferred embodiments according to the present disclosure have been described above, the present disclosure is not limited to these embodiments, and various modifications and changes can be made within the scope of the claims.

## Claims

1. A sensor mounting structure comprising:
an outer plate member provided with a through hole (7);
an ultrasonic sensor (10) arranged more inward than the through hole (7); and
a sealing member (30) arranged spaced apart from the ultrasonic sensor (10), the sealing member (30) covering the through hole (7), wherein
the sensor mounting structure is configured such that an ultrasonic wave transmitted from the ultrasonic sensor (10) passes through the through hole (7) and propagates to an outside via the sealing member (30), and a reflected wave reflected from the outside passes through the through hole (7) via the sealing member (30) and is received by the ultrasonic sensor (10).

2. The sensor mounting structure according to claim 1, wherein the sealing member (30) is configured such that an amplitude of the ultrasonic wave transmitted from the ultrasonic sensor (10) to the outside via the sealing member (30) is larger than an amplitude of the ultrasonic wave transmitted from the ultrasonic sensor (10) to the outside via the outer plate member in a case where the outer plate member is provided instead of the sealing member (30).

3. The sensor mounting structure according to claim 1 or 2, wherein the sealing member (30) is configured to resonate with the ultrasonic wave transmitted by the ultrasonic sensor (10).

4. The sensor mounting structure according to any one of claims 1-3, wherein the sealing member (30) is configured to have a natural frequency that deviates from a natural frequency of a member configured to transmit the ultrasonic wave in the ultrasonic sensor (10) by 5% or less.

5. The sensor mounting structure according to any one of claims 1-4, wherein a thickness of the sealing member (30) is smaller than a thickness of the outer plate member.

6. The sensor mounting structure according to any one of claims 1-5, wherein
the outer plate member has a plurality of the through holes (7),
one of the ultrasonic sensor (10) and one of the sealing member (30) are arranged for each of the plurality of through holes (7), and
the sealing member (30) is configured to have at least partially different thicknesses.

7. The sensor mounting structure according to any one of claims 1-6, wherein the sealing member (30) is formed of the same material as a member configured to transmit the ultrasonic wave in the ultrasonic sensor (10).

8. The sensor mounting structure according to any one of claims 1-7, wherein
the outer plate member has a coating film on an outer surface side thereof, and
the sealing member (30) has, on an outer surface side thereof, a coating film formed of the same material as the coating film of the outer plate member.

9. The sensor mounting structure according to any one of claims 1-8, wherein the sealing member (30) and the ultrasonic sensor (10) are spaced apart by a non-conductive spacer (31) arranged between the sealing member (30) and the ultrasonic sensor (10).

10. The sensor mounting structure according to any one of claims 1-9, further comprising a processing unit (54) electrically connected to the ultrasonic sensor (10), wherein
the processing unit is configured to calculate a speed of a surrounding object based on a value obtained by multiplying a frequency of the reflected wave detected by the ultrasonic sensor (10) by a predetermined coefficient, and
the coefficient changes based on at least one of a distance and an angle between the ultrasonic sensor (10) and the sealing member (30).
